# FASCICULE DE BREVET EUROPEEN

(11) **EP 1 397 315 B1**
(45) Date de publication et mention de la délivrance du brevet: **20.07.2005**
(21) Numéro de dépôt: 02727659.1
(22) Date de dépôt: 16.04.2002
(51) Int. Cl.: C03B 37/026

(54) **PROCEDE ET DISPOSITIF DE FABRICATION EN CONTINU DE FILS METALLIQUES GAINES DE VERRE**
VERFAHREN UND VORRICHTUNG ZUR KONTINUIERLICHEN HERSTELLUNG VON METALLFASERN MIT EINEM GLASÜBERZUG
METHOD AND DEVICE FOR CONTINUOUS PRODUCTION OF GLASS-SHEATHED METAL WIRES

(30) Priorité: 18.04.2001 FR 0105243
(43) Date de publication de la demande: 17.03.2004
(73) Titulaire: COMMISSARIAT A L'ENERGIE ATOMIQUE, 75015 Paris Cédex 15 (FR)
(72) Inventeur: DEPROT, Sylvie, F-37510 Ballan Mire (FR); ACHER, Olivier, F-37260 Monts (FR); BERTIN, Frédéric, F-37000 Tours (FR)
(74) Mandataire: Poulin, Gérard
(86) Numéro de dépôt international: PCT/FR2002/001305
(87) Numéro de publication internationale: WO 2002/083584

(56) Documents cités:
- US-A- 3 214 805
- US-A- 3 294 504
- US-A- 3 481 390

## Description

### Domaine de l'invention

L'invention concerne la fabrication en continu de fils métalliques gainés de verre, et en particulier lorsque les deux matériaux constitutifs du fil sont chauffés et fondus partiellement pour être étirés en continu dans leur forme définitive.

### Art antérieur et problème posé

Tous les procédés de l'art antérieur, pour fabriquer en continu des fils métalliques gainés, se fondent sur un procédé élaboré et décrit, la première fois, par TAYLOR en 1924. Il consiste dans le principe suivant.

On introduit, au préalable, une certaine quantité de métal dans un tube de verre fermé à sa base. La partie inférieure de ce tube est placée au voisinage d'un inducteur à haute fréquence, ce qui conduit à la fusion du métal placé dans le tube de verre. Le verre se ramollit par conduction thermique. L'opération de coulée du microfilament, constitué du fil métallique dans sa gaine de verre, est amorcée manuellement à l'aide d'un capillaire. Le fil initié est ensuite placé sur un tambour tournant, de façon à étirer continûment l'ensemble constitué du métal entouré de verre. Des fils, dont le diamètre total peut varier de 6 à 25 µm, avec un coeur métallique pouvant aller de 2 à 18 µm, sont couramment obtenus par ce procédé de mise en forme.

Cependant, ce procédé a pour principal défaut de ne pas fonctionner en continu, car, si la masse de métal introduite dans le tube est trop importante, il y a risque de perforation de l'enveloppe vitreuse. En effet, le couplage de l'inducteur avec le métal est d'autant plus important que la masse de métal est plus grande. En conséquence, l'importance du ramollissement de la partie inférieure du tube est directement fonction de la masse de métal fondu dans ce tube.

La masse de métal que l'on peut introduire dans le tube de verre est donc limitée, ce qui oblige l'opérateur à fractionner l'opération de coulée.

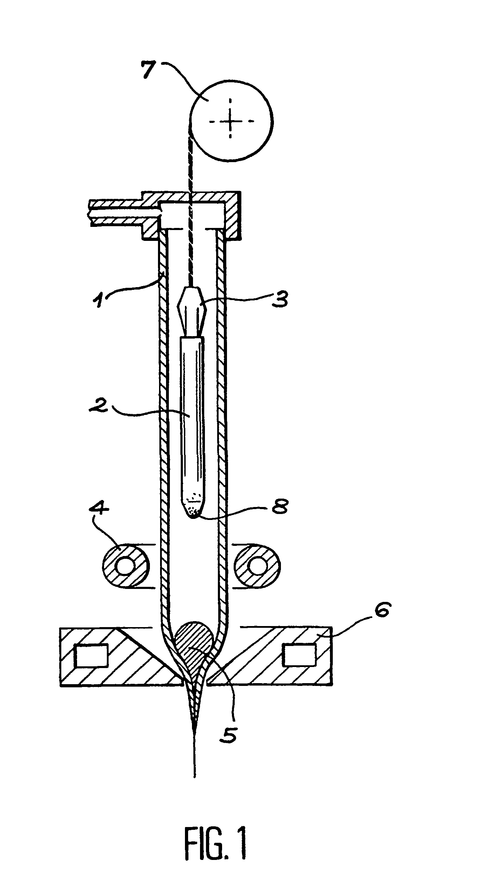

Cet inconvénient a conduit au développement de perfectionnements de cette méthode. Ainsi, le brevet russe, SU-A-1 088 075, décrit un procédé de coulage d'un microconducteur dans du verre isolant, schématisé par la figure 1. Il utilise un tube de verre 1 dans lequel est formée une goutte de métal fondu 5 destinée à constituer le fil, une fois que l'extrémité inférieure du tube de verre 1 s'est ramollie au contact de cette goutte 5. Un premier inducteur 4, placé autour du tube de verre 1, chauffe une baguette de métal 2, placée à l'intérieur du tube de verre 1, au moyen d'une pince de serrage 3, et descendue à l'aide d'un dispositif de montée et de descente 7. Le chauffage de la baguette de métal 2 est prévu pour qu'une goutte d'apport 8 de métal en fusion soit constamment suspendue à la partie inférieure de la baguette 2, afin d'alimenter régulièrement la goutte de métal en fusion 5 placée dans la partie inférieure du tube de verre 1, lorsqu'elle est consommée de façon trop importante. L'inducteur inférieur 6 permet de maintenir en fusion la goutte de métal 5 et ainsi de réaliser l'étirage du fil métallique gainé de verre.

Si ce procédé permet de résoudre une partie des problèmes posés par le procédé TAYLOR, par exemple en disposant d'une réserve métallique, permettant de réaliser une longueur importante de fil sans arrêt de la machine, il présente néanmoins deux inconvénients liés au caractère discontinu de l'apport de métal fondu au microbain constitué par la goutte de métal en fusion 5 et à la difficulté du contrôle de la goutte d'apport 8 à l'extrémité inférieure de la baguette 2. En effet, cette goutte d'apport 8, de masse non négligeable devant la goutte de métal fondu 5, crée un accroissement brutal de la masse du bain métallique, entraînant un étirement de la partie ramollie du tube de verre 1, jusqu'à la zone de plus grande intensité magnétique. Le bain est ainsi amené brutalement à une température très élevée, ce qui entraîne une modification des caractéristiques géométriques du fil. De plus, la fusion discontinue de la baguette 2, due à l'intervalle de quelques minutes séparant la création de deux gouttes d'apport successives 8 en bas de la baguette, entraîne un apport périodique d'oxydes non homogènes dans la goutte de métal fondu 5, préjudiciables à l'homogénéité des qualités du fil métallique. En effet, certains de ces oxydes dont le point de fusion est plus élevé vont former des inclusions souvent insolubles, qui, amenées dans la zone de formation du fil métallique, risquent d'entraîner sa rupture.

Une autre solution est exposée dans le brevet américain, n° 3 362 803. Elle consiste à remplir le tube de verre de la quantité de métal nécessaire à la longueur voulue du fil métallique à obtenir, mais en ne faisant fondre que le métal au fond du tube de verre par induction. La partie supérieure du métal est préchauffée par une résistance électrique à une température inférieure à la température de ramollissement du verre ou de la céramique, mais le métal fondu étant bon conducteur de la chaleur, celle-ci va se propager vers le haut. Le verre étant en contact avec l'alliage fondu se ramollit alors sur une hauteur telle qu'il y a un risque de rupture du tube de verre sous l'action de la masse du métal contenu.

Le but de l'invention est de résoudre les problèmes posés par les dispositifs et les procédés ci-dessus mentionnés.

D'autre part, par le document de brevet US-A-3 481 390, on connaît un procédé permettant de travailler les métaux ayant une température de fusion élevée, qui fluidifie trop le verre, et des métaux réactifs qui limitent les matériaux utilisés pour constituer le dispositif. Le procédé proposé dans ce document consiste à fondre le métal/alliage métallique dans un creuset réfractaire totalement inerte vis-à-vis de celui-ci. Ce creuset, dont la base inférieure est terminée par une filière, est placé dans le tube de verre, sans aucun contact avec lui. On utilise un premier moyen de chauffage pour fondre l'alliage contenu dans le creuset et un second placé au niveau de l'extrémité inférieure du tube de verre pour la ramollir, afin de pouvoir initier un capillaire de verre, à partir de celle-ci. D'autre part, le dispositif utilise des moyens permettant d'appliquer une pression dans le creuset pour éjecter l'alliage liquide à travers l'orifice de la filière, sous forme d'un jet de métal fondu, en direction du capillaire formé. Dans ce dispositif, le métal sortant du creuset chute sur une distance comprise entre 2 et 15 cm, pour atteindre, le plus tard possible, le tube de verre, le métal s'étant quelque peu refroidi. Le contact entre le métal fondu et le verre n'a lieu que pendant une très courte période (temps de contact entre 0,5 et 0,002 s) et uniquement au niveau du capillaire. En conséquence, le procédé, mis en oeuvre dans ce document US-A-3 481 390, est très différent du principe de TAYLOR (pas de bille de métal fondu permanente, utilisation d'une surpression pour éjecter le métal fondu). De plus, les fils obtenus par le procédé mis en oeuvre dans ce document ont en général un diamètre supérieur à 30 µm, alors que un des buts de l'invention est de fabriquer à grande vitesse des fils dont le diamètre est inférieur à 20 µm (vitesses supérieures à 10 m/s).

### Résumé de l'invention

Un premier objet principal de l'invention est un procédé de fabrication en continu d'un fil métallique gainé de verre consistant à :
- introduire du métal dans un tube de verre fermé dans sa partie inférieure et qui est mobile ;
- chauffer le métal jusqu'à sa fusion à l'intérieur du tube de verre, dans le but de créer une goutte procédé de métal fondu, permettant ainsi le ramollissement d'une partie inférieure du tube de verre ;
- étirer de façon continue l'assemblage constitué du métal fondu entouré du verre, issu de la partie inférieure du tube de verre, tout en faisant descendre petit à petit le tube de verre, au fur et à mesure qu'il est consommé par l'étirage du fil gainé obtenu ;
- utiliser un tube d'alimentation résistant aux chocs thermiques qui est fixe par rapport au tube de verre, de diamètre externe inférieur au diamètre interne du tube de verre, totalement inerte vis-à-vis de la masse métallique et ne se ramollissant pas à la température à laquelle est portée la masse métallique, placé à l'intérieur du tube de verre, rempli de la totalité du métal nécessaire à la fabrication d'une grande quantité d'un fil métallique gainé de verre et percé d'une buse dans sa partie inférieure, cette buse se trouvant à une petite distance déterminée de la partie inférieure du tube de verre, en contact avec la goutte procédé, permettant ainsi la formation de la goutte procédé et l'alimentation en continu de celle-ci, de façon à ce que les dimensions de cette goutte procédé restent sensiblement constantes pendant l'étirage du fil. On utilise des moyens de mise en dépression du tube d'alimentation pour retenir la masse métallique fondue dans ce tube. La dépression est ensuite relâchée et régulée de manière à provoquer le début de l'écoulement du métal fondu par la buse et contrôler l'écoulement continu de la masse métallique pendant l'étirage.

Il s'avère avantageux de faire passer un gaz inerte tel que de l'argon entre les deux tubes pour minimiser la quantité d'oxydes dans le fil fabriqué.

Il est très intéressant d'utiliser les moyens (balayage gazeux ci-dessus) pour balayer et purger l'intérieur du tube d'alimentation avec un gaz inerte, avant la fusion de la goutte métallique.

Un deuxième objet principal de l'invention est un dispositif de fabrication en continu de fils métalliques gainés de verre à partir d'un tube de verre fermé à sa base, de diamètre déterminé, comprenant :
- des moyens de chauffage pour fondre une masse métallique placée dans le tube de verre et maintenir une goutte procédé de métal fondu à l'état liquide ramollissant une partie inférieure du tube de verre ;
- un tube d'alimentation contenant la masse métallique, de diamètre externe inférieur au diamètre interne du tube de verre, résistant aux chocs thermiques, étant totalement inerte vis-à-vis de la masse métallique et ne se ramollissant pas à la température de travail, ce tube d'alimentation possédant une buse dans sa partie inférieure, et étant placé dans le tube de verre, de manière à placer sa buse très près du tube de verre ;
- des moyens de mise en déplacement du tube de verre pour le faire descendre progressivement, au fur et à mesure qu'il est consommé par l'étirage du fil ; et
- des moyens de mise en dépression et de balayage pour créer et maîtriser une dépression à l'intérieur du tube d'alimentation, afin de réguler et contrôler l'écoulement de la masse métallique fondue alimentant la goutte procédé.

Dans la réalisation préférentielle des moyens de chauffage, ceux-ci comprennent un premier four à induction dont les spires entourent la partie inférieure du tube d'alimentation sur plusieurs centimètres.

De préférence, les moyens de chauffage de la goutte procédé, à l'intérieur du tube de verre, comprennent un deuxième inducteur, en forme de coupelle et placé en dessous de la partie inférieure du tube de verre.

Une circulation d'argon est organisée entre le tube de verre et le tube d'alimentation en métal et un joint à presse étoupe est utilisé dans la partie supérieure du tube de verre pour réaliser l'étanchéité entre celui-ci et le tube d'alimentation en métal.

On complète le dispositif par des moyens de balayage par gaz inerte dans le tube de verre.

### Liste des figures

L'invention et ses différentes caractéristiques seront mieux comprises à la lecture détaillée de la description suivante, accompagnée de deux figures qui représentent respectivement :
- figure 1, déjà décrite, un dispositif selon l'art antérieur ; et
- figure 2, un dispositif selon l'invention.

### Description détaillée d'une réalisation de l'invention

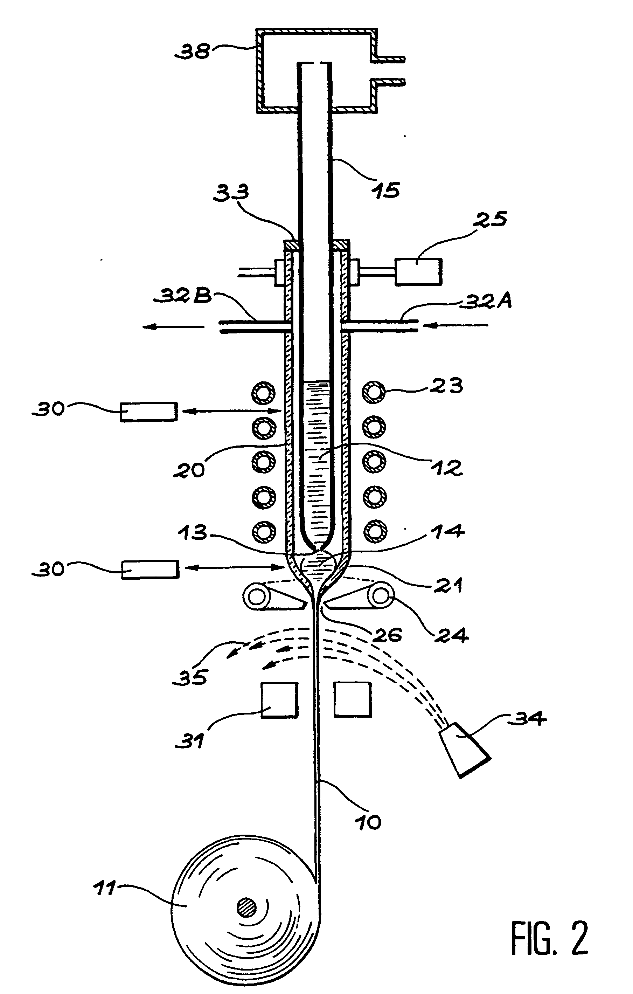

En référence à la figure 2, le dispositif selon l'invention reprend des éléments fonctionnels décrits dans celui de la figure 1 et relatifs à l'art antérieur. Ce sont le tube de verre 20, un premier élément de chauffage constitué par un inducteur 23, placé autour de ce dernier, un deuxième moyen de chauffage constitué par un deuxième inducteur 24 placé sous la partie inférieure 21 du tube de verre 20, et des moyens de balayage et de mise en dépression 38 à l'intérieur du tube 15. Pour mieux expliciter le procédé de fabrication de fils métalliques gainés de verre, on a figuré, sur cette figure 2, des éléments secondaires qui sont les suivants.

Des capteurs de température, tels que des pyromètres 30 sont placés au niveau du chauffage du tube de verre 20 et au niveau du chauffage de sa partie inférieure 21. Un dispositif de jet d'eau 34 arrose le fil métallique gainé 10 issu de l'étirage pour le refroidir rapidement. Un dispositif de mesure du diamètre du fil 31 est placé en aval de l'ensemble pour contrôler le diamètre de celui-ci. Enfin, un dispositif d'enroulement 11, sous la forme d'une bobine, stocke le fil ainsi étiré 10.

Selon la température de fusion de l'alliage métallique utilisé pour fabriquer le fil métallique gainé 10, différents types de verre peuvent être utilisés pour réaliser le tube 20, comme des verres borosilicatés, des aluminosilicates, de la silice à 96 % ou du quartz fondu. Des céramiques peuvent également être employées. De plus, il faut prendre en compte le fait que la température d'étirage est supérieure de 50 à 300°C à celle de fusion du métal. Un dispositif de descente progressive 25 permet au tube de verre 20 d'être descendu petit à petit, au fur et à mesure qu'il est consommé par l'étirage du fil.

Une caractéristique technique importante de l'invention consiste donc à utiliser un tube d'alimentation 15 dans lequel est placée, au préalable, la totalité de la masse métallique 12 constituée de métal ou d'alliage métallique. Ce tube d'alimentation 15 peut être constitué d'un matériau réfractaire, dont la température de dégradation ou de détérioration est supérieure à la température de travail. Il peut s'agir de quartz, par exemple, lorsque l'on cherche à réaliser des alliages amorphes ou microcristallisés et dont la température de fusion se situe vers 1 000°C. Pour des alliages dont les températures de fusion sont plus élevées, il est possible d'avoir recours à des tubes en alumine, en nitrure de bore ou encore en borure de titane.

Ce tube d'alimentation 15, qui est fixe, est donc rempli de l'alliage ou du métal à mettre en forme ou bien d'éléments purs constituant un alliage. La masse métallique 12 est portée à fusion par les spires d'un premier inducteur 23 constituant une partie des moyens de chauffage. En effet, celles-ci entourent le tube d'alimentation 15 dans sa partie inférieure, créant ainsi une deuxième zone de chauffe, par rapport à celle existant dans le dispositif de la figure 1, symbolisant l'art antérieur. Le nombre de spires du premier inducteur 23 dépend de la hauteur de métal fondu de la masse métallique 12 que l'on désire obtenir.

Le dispositif de balayage par gaz inerte et de mise en dépression et de balayage 38 est donc branché directement sur une issue supérieure du tube d'alimentation 15 pour éviter, une fois que la masse métallique 12 est fondue, que celle-ci ne s'écoule librement par la buse inférieure 13 du tube d'alimentation 15. Cette buse inférieure est placée juste au-dessus de la partie inférieure 21 du tube de verre 20. On précise que celui-ci est également placé par rapport au deuxième inducteur 24, qui est placé juste en dessous de la partie inférieure 21 du tube de verre 20, de manière adéquate pour amener la goutte procédé 14 et le verre du tube de verre 20 aux températures idoines pour l'étirage. Cette hauteur de la buse 13, par rapport à la partie inférieure 21 du tube de verre 20, est inférieure ou égale à la hauteur désirée de la goutte de métal fondu 14, appelée « goutte procédé » dans la zone de procédé se trouvant entre la buse 13 du tube de verre 15 et la partie inférieure 21 du tube 20. La hauteur de la goutte procédé 14 règle la carte des températures dans le bas du tube de verre 20 et la force exercée par le poids de la goutte procédé 14 sur la partie inférieure 21 du tube de verre 20. En utilisant le dispositif de mise en dépression et de balayage 38, il est donc possible de contrôler la hauteur de la goutte procédé 14. De plus, en réglant la température de la masse métallique 12 dans le tube d'alimentation 15 a une valeur proche de la température de la goutte procédé 14, on n'induit pas de déséquilibre thermique dans la zone de procédé qui est celle de la goutte procédé 14.

Il faut également signaler que non seulement la masse et la température de la goutte procédé 14, mais aussi sa forme influencent la géométrie et les qualités du fil gainé obtenu. Dans les procédés de l'art antérieur, le métal se présente dans le tube de verre, essentiellement comme une goutte procédé ressemblant à un sphéroïde aplati. Grâce à l'utilisation du tube d'alimentation 15, il est possible de contrôler la forme de la goutte procédé 14, en particulier l'aire de contact avec la partie inférieure 21 du tube de verre 20. A cet effet, plusieurs formes différentes peuvent être données à la buse 13 pour obtenir des résultats différents.

Il faut noter que, puisque l'alimentation en métal fondu se fait par une communication directe dans la zone de procédé, la présence éventuelle d'impuretés ou de verre fondu flottant sur la goutte procédé 14 est sans importance.

Le deuxième inducteur 24, constituant des moyens de chauffage de la goutte procédé 14 et placé en dessous de la partie inférieure 21 du tube de verre 20, est constitué d'une ou de plusieurs spires d'induction. Ce deuxième inducteur 24 est placé au niveau de la goutte procédé 14, de préférence, juste en dessous de la partie inférieure 21 du tube de verre 20, de façon à maintenir la goutte procédé 14 en sustentation, grâce aux forces de Laplace.

Ainsi, dans la réalisation de la figure 2, on utilise une monospire plate légèrement incurvée, en forme de coupelle percée en son centre, les bords étant relevés depuis le trou central 26. Le tube de verre 20 est placé jusqu'à 10 mm au-dessus du trou central 26. En particulier, le trou central 26 se trouvant sous le tube de verre 20, son rayon intérieur peut être plus faible que le rayon du tube de verre 20. Ceci permet de diminuer la hauteur de chauffe qui est de l'ordre du rayon intérieur de la spire. L'énergie de chauffage est donc concentrée sur la goutte procédé 14.

Le deuxième inducteur 24 peut également être composé de plusieurs spires avec un arrangement conique permettant également de réaliser la sustentation de la goutte procédé 14. Cette mise en sustentation permet d'éviter un allongement inopiné du tube de verre 20, en diminuant la force exerçant sur la partie inférieure 21 de ce tube de verre 20.

On peut également utiliser un four à rayonnement infrarouge pour constituer ces moyens de chauffage de la goutte procédé 14.

La canalisation d'entrée 32A et la canalisation de sortie 32B permettent d'organiser une circulation d'argon entre le tube de verre 20 et l'extérieur du tube d'alimentation 15. L'étanchéité de cet espace est assurée par un joint à presse étoupe 33 placé entre le tube de verre 20 et le tube d'alimentation 15.

On rappelle que le tube de verre 20 est monté mobile par rapport au tube d'alimentation 15 et par rapport aux deux inducteurs 23 et 24. De cette manière, au fur et à mesure de sa consommation par étirage du fil, le tube de verre 20 est descendu petit à petit.

Le procédé selon l'invention est le suivant.

La totalité du métal ou de l'alliage métallique nécessaire pour la fabrication du fil gainé 10 est introduite dans le tube d'alimentation 15, sous forme de lingots ou sous forme de poudre. Cette masse métallique 12 est chauffée par le premier inducteur 23 et fondue à l'intérieur du tube d'alimentation 15.

Au préalable, le dispositif est purgé et est mis sous gaz inerte, en particulier de l'argon, avant la fusion du métal. Ainsi, un courant d'argon circule du tube d'alimentation 15 vers le tube de verre 20, grâce aux moyens de balayage et de dépression 38 et aux canalisations d'entrée 32A et de sortie 32B. La buse 13 du tube d'alimentation 15 n'est pas encore obstruée par du métal en fusion.

Le premier inducteur 23 chauffe la masse métallique 12 et la circulation d'argon dans le tube d'alimentation 15 est stoppée. Puis une dépression est créée à l'intérieur du tube d'alimentation 15 pour éviter que la masse métallique 12 fondue ne s'écoule librement vers la partie inférieure 21 du tube de verre 20. En revanche, le balayage d'argon est toujours assuré à l'intérieur du tube de verre 20, et à l'extérieur du tube d'alimentation 15, grâce aux entrée et sortie d'argon 32A et 32B.

La dépression dans le tube d'alimentation 15 est ensuite diminuée pour permettre l'écoulement continu et lent de la masse métallique 12 liquide vers la partie inférieure 21 du tube de verre 20, et ceci avec un débit déterminé de métal fondu. La goutte procédé 14 se forme alors à l'intérieur de la partie inférieure 21 du tube 20 dont les dimensions et la masse sont contrôlées. Cette dernière est, en outre, chauffée et maintenue à l'état liquide par le deuxième inducteur 24.

Le processus d'alimentation doit se dérouler sans perturbation dynamique. D'autre part, la masse métal de la goutte procédé 14 ne doit pas être trop importante pour ne pas étirer excessivement le verre ramolli de la partie inférieure 21.

La masse de la goutte procédé 14 doit être maintenue constante. Ainsi, la quantité de métal consommée par l'étirage du fil est en permanence remplacée par une même quantité de métal provenant du tube d'alimentation 15.

Les températures de la masse métallique 12 fondue et de la goutte procédé 14 doivent être voisines, de façon à limiter au maximum les perturbations thermiques.

Il est ainsi possible de fabriquer en continu un fil métallique en introduisant une quarantaine de grammes d'un alliage de CoFeNiMoSiB dans le tube d'alimentation 15 en quartz. Le tube de verre 20 peut être réalisé en verre borosilicaté, du type PYREX 7 740.

Le deuxième inducteur 24 est une monospire légèrement incurvée de diamètre 50 mm, percé d'un trou 26 de 8 mm. Le premier inducteur 23 peut être constitué de plusieurs spires de diamètre de 20 mm, sur une hauteur de 100 mm. Celui-ci doit être placé à 20 mm au-dessus du deuxième inducteur 24, lui-même placé à 10 mm en dessous de la partie inférieure 21 du tube de verre 20.

La hauteur du tube de verre 20 peut être de 500 mm, son diamètre interne étant de 12,6 mm et l'épaisseur de sa paroi étant de 1,2 mm.

Le tube d'alimentation 15 peut avoir une hauteur avoisinant 1 m, un diamètre externe de 10 mm et un diamètre interne de 8 mm. La buse 13 se trouvant dans sa partie inférieure peut avoir un diamètre de 1 mm. Bien entendu, ce tube d'alimentation 15 est centré à l'intérieur du tube de verre 20 et est positionné 10 mm au-dessus de la partie inférieure 21.

Dans ce cas, la température de l'alliage métallique est maintenue environ à 1 280°C dans les deux tubes 15 et 20. Cette température est contrôlée par les deux pyromètres 30. La masse de la goutte procédé 14 est d'environ 5 g, sa hauteur est d'environ 10 mm.

La vitesse d'avance du tube de verre 20 est réglée à 2,5 mm/min, la vitesse de bobinage à 10 m/s. La vitesse de descente du niveau de la masse métallique fondue 12 dans le tube d'alimentation 15 est de 0,2 mm/min.

Le fil étiré dans ces conditions expérimentales a un diamètre total de 16 µm et un coeur métallique de 5 µm.

De la même manière, une vingtaine de grammes d'un alliage CoFeNbB peut être placé dans le tube d'alimentation 15 de diamètre total 8 mm et de diamètre interne 6 mm. La température de l'alliage métallique est maintenue à 1 260°C dans les tubes 15 et 20. La vitesse d'avance du tube de verre 20 est réglée à 2 mm/min, la vitesse de bobinage à 18 m/s. La vitesse de descente du niveau de la masse métallique fondue 12 fondue dans le tube d'alimentation 15 est de 0,75 mm/min.

Le fil étiré dans ces conditions a un diamètre total de 10 µm et un coeur métallique de 5 µm. On peut augmenter la vitesse de bobinage jusqu'à des valeurs comprises entre 20 et 80 m/s, à condition d'augmenter la vitesse de descente du tube de 4 à 13 mm/min. On obtient, par exemple, un fil de diamètre total de 9 µm avec un coeur métallique de 4 µm.

Dans tous les cas, à la sortie du deuxième inducteur 24, le fil métallique gainé obtenu est étiré et trempé par le jet d'eau 35, lui conférant alors une structure amorphe.

L'ensemble est doté d'un capteur à diffraction laser 31, placé 300 mm en dessous du deuxième inducteur 24. Il permet de mesurer le diamètre total du fil gainé fabriqué, pendant toute la durée de l'étirage.

## Revendications

1. Procédé de fabrication en continu d'un fil métallique gainé de verre (10), consistant à :
- introduire du métal dans un tube de verre (20) fermé à sa partie inférieure (21) et qui est mobile ;
- chauffer le métal jusqu'à sa fusion à l'intérieur du tube de verre (20), dans sa partie inférieure, dans le but de créer une goutte procédé (14) de métal fondu dans une partie inférieure (21) du tube de verre (20) pour la ramollir ;
- étirer de façon continue l'assemblage constitué du métal fondu entouré du verre, issu de la partie inférieure (21) du tube de verre (20), tout en faisant descendre petit à petit le tube de verre (20) fondu partiellement au niveau de sa partie inférieure (21), au fur et à mesure qu'il est consommé par l'étirage du fil gainé obtenu,
- utiliser un tube d'alimentation résistant aux chocs thermiques (15) qui est fixe par rapport au tube de verre (20), de diamètre externe inférieur au diamètre interne du tube de verre (20), totalement inerte vis-à-vis de la masse métallique (12) et ne se ramollissant pas à la température de travail, placé à l'intérieur du tube de verre (20), rempli de la totalité du métal nécessaire à la fabrication d'une grande quantité d'un fil métallique gainé de verre (10) et percé d'une buse (13) dans sa partie inférieure, cette buse (13) se trouvant à une petite distance déterminée de la partie inférieure (21) du tube de verre (20), en contact avec la goutte procédé (14), permettant ainsi la formation de la goutte procédé (14) et l'alimentation en continu de celle-ci, de façon à ce que les dimensions de cette goutte procédé (14) restent sensiblement constante pendant l'étirage du fil, et en ce qu'on utilise des moyens de mise en dépression du tube d'alimentation (15) pour retenir la masse métallique (12) à l'intérieur de ce tube, puis relâcher et réguler cette dépression, afin de provoquer le début de l'écoulement du métal fondu par la buse (13) et de contrôler l'écoulement continu de la masse métallique (12) fondue pendant l'étirage.

2. Procédé de fabrication d'un fil métallique gainé de verre (10) selon la revendication 1, **caractérisé en ce qu'**un gaz inerte circule entre le tube d'alimentation (15) et le tube de verre (20).

3. Procédé selon la revendication 1, **caractérisé en ce qu'**on utilise les moyens de mise en dépression et de balayage (38) pour balayer l'intérieur du tube d'alimentation (15) de gaz inerte, avant la fusion de la masse métallique (12).

4. Dispositif de fabrication en continu d'un fil métallique gainé de verre (10), à partir d'un tube de verre (20) fermé à sa base (21), de diamètre déterminé comportant principalement :
- des moyens de chauffage (23) pour fondre une masse métallique (12) placée dans le tube de verre (20) et maintenir une goutte procédé (14) de métal fondu à l'état liquide ramollissant une partie inférieure (21) du tube de verre (20),
- un tube d'alimentation contenant la masse métallique (12), de diamètre externe inférieur au diamètre interne du tube de verre (20), résistant aux chocs thermiques, étant totalement inerte vis-à-vis de la masse métallique et ne se ramollissant pas à la température de fusion du métal à fondre, ce tube d'alimentation (15) possédant une buse (13) dans sa partie inférieure, et étant placé dans le tube de verre, de manière à placer sa buse (13) très près de la partie inférieure (21) du tube de verre ;
- des moyens de mise en déplacement du tube de verre (20) pour le faire descendre progressivement, au fur et à mesure qu'il est consommé par l'étirage du fil ; et
- des moyens de mise en dépression du tube d'alimentation (15) pour créer et maîtriser une dépression à l'intérieur de celui-ci, afin de réguler et commander l'écoulement de la partie fondue de la masse métallique (12).

5. Dispositif selon la revendication 4, **caractérisé en ce que** les moyens de chauffage sont constitués d'un premier inducteur (23) pour chauffer l'intérieur du tube d'alimentation (15) dans sa partie inférieure, sur plusieurs centimètres, constituant ainsi un premier four à induction.

6. Dispositif selon la revendication 4,
**caractérisé en ce que** les moyens de chauffage de la goutte procédé (14) à l'intérieur du tube de verre (20) comprennent un deuxième inducteur (24), en forme de coupelle et placé en dessous de la partie inférieure (21) du tube de verre (20).

7. Dispositif selon la revendication 4,
**caractérisé en ce qu'**il comprend une circulation d'argon (32A, 32B), entre le tube de verre (20) et le tube d'alimentation (15), un joint presse étoupe (33) étant prévu dans la partie supérieure du tube de verre (20) pour réaliser l'étanchéité entre le tube de verre (20) et le tube d'alimentation (15).

8. Dispositif selon la revendication 7, **caractérisé en ce qu'**il comprend des moyens de balayage par gaz inerte (32A, 32B) dans le tube de verre (20).

## Patentansprüche

1. Verfahren zur kontinuierlichen Herstellung einer glasüberzogenen Metallfaser (10), darin bestehend:
- in ein bewegliches, an seinem unteren Ende (21) verschlossenes Glasrohr (20) Metall einzuspeisen;
- das Metall im Innem des Glasrohrs (20) in dessen unterem Teil bis zum Schmelzen zu erhitzen, um in einem unteren Teil (21) des Glasrohrs (20) einen prozessfähigen Tropfen (14) zu erzeugen und damit diesen unteren Teil (21) weich zu machen.
- den aus dem unteren Teil (21) des Glasrohrs (20) austretenden Verbund aus geschmolzenem Metall und Glasüberzug kontinuierlich zu ziehen, wobei das in Höhe seines unteren Teils (21) partiell geschmolzene Glasrohr (20) in dem Maße langsam abgesenkt wird, wie es durch das Ziehen der efialtenen glasüberzogenen Faser konsumiert bzw. verbraucht wird;
- ein gegenüber Thermoschocks resistentes Speisungsrohr (15) zu benutzen, das in Bezug auf das Glasrohr (20) stationär ist, dessen Außendurchmesser kleiner ist als der Innendurchmesser des Glaserohrs (20), das total inert ist gegenüber der metallischen Masse (12), das bei der Arbeitstemperatur nicht weich wird, das sich im Innem des Glasrohrs (20) befindet, das gefüllt ist mit der Gesamtheit des Metalls, welches zur Herstellung einer großen Quantität einer glasüberzogenen Metallfaser (10) nötig ist, und das in seinem unteren Teil eine Düse (13) mit einem bestimmten, kleinen Abstand von dem unteren Teil (21) des Glasrohrs (20) aufweist, der in Kontakt ist mit dem prozessfähigen Tropfen (14) und derart die Bildung des prozessfähigen Tropfens (14) und die kontinuierliche Speisung von diesem ermöglicht, so dass die Dimensionen dieses prozessfähigen Tropfens während des Ziehens der Faser im Wesentlichen konstant bleiben, wobei man Einrichtungen zur Erzeugung eines Unterdrucks in dem Speisungsrohr (15), um die metallische Masse (12) im Innem dieses Rohrs zurückzuhalten, und zur Entspannung und Regelung dieses Unterdrucks benutzt, um den Beginn des Abfließens des geschmolzenen Metalls durch die Düse (13) zu bewirken und das kontinuierliche Abfließen der während des Ziehens geschmolzenen metallischen Masse (12) zu steuern.

2. Verfahren zur Herstellung einer glasüberzogenen Metallfaser (10) nach Anspruch 1,
**dadurch gekennzeichnet,**
**dass** zwischen dem Speisungsrohr (15) und dem Glasrohr (20) ein Inertgas zirkuliert.

3. Verfahren nach Anspruch 1, **dadurch gekennzeichnet, dass** man die Einrichtungen (38) zur Erzeugung eines Unterdrucks und zur Spülung benutzt, um vor dem Schmelzen der metallischen Masse (12) das Innere des Speisungsrohrs (15) mit Inertgas zu spülen.

4. Vorrichtung zur kontinuierlichen Herstellung einer glasüberzogenen Metallfaser (10) aus einem an seinem unteren Ende (21) verschlossenen Glasrohr (20) eines bestimmten Durchmessers, hauptsächlich umfassend:
- Heizeinrichtungen (23), um eine im Innem des Glasrohrs (20) befindliche metallische Masse (12) zu schmelzen und einen prozessfähigen Tropfen (14) im geschmolzenen Zustand zu halten, der einen unteren Teil (21) des Glasrohrs (20) weich macht,
- ein die metallische Masse (12) enthaltendes Speisungsrohr (15), dessen Außendurchmesser kleiner ist als der Innendurchmesser des Glasrohrs (20), das resistent ist gegenüber Thermoschocks, das total inert ist gegenüber der metallischen Masse und das bei der Schmelztemperatur des zu schmelzenden Metalls nicht weich wird, wobei dieses Speisungsrohr (15) in seinem unteren Teil eine Düse (13) besitzt und so in dem Glasrohr positioniert ist, dass seine Düse (13) sich sehr nahe bei dem unteren Teil (21) des Glasrohrs befindet;
- Einrichtungen zum Verschieben des Glasrohrs (20), um es progressiv in dem Maße abzusenken, wie es durch das Ziehen der Faser verbraucht wird; und
- Einrichtungen zum Erzeugen und Beherrschen eines Unterdrucks in dem Speisungsrohr (15), um das Abfließen des geschmolzenen Teils der metallischen Masse (12) zu regeln und zu steuern.

5. Vorrichtung nach Anspruch 4, **dadurch gekennzeichnet, dass** die Heizeinrichtungen durch einen ersten Induktor (23) gebildet werden, um das Innere des Speisungsrohrs (15) in seinem unteren Teil über mehrere Zentimeter zu erhitzen und somit einen ersten Induktionsofen zu bilden

6. Vomchtung nach Anspruch 4, **dadurch gekennzeichnet, dass** die Heizeinrichtungen des prozessfähigen Tropfens (14) im Innern des Glasrohrs (20) einen schalenförmigen zweiten Induktor (24) umfassen, der sich unter dem unteren Teil (21) des Glasrohrs (20) befindet.

7. Vorrichtung nach Anspruch 4, **dadurch gekennzeichnet, dass** sie eine Argon-Zirkulation (32A, 328) zwischen dem Glasrohr (20) und dem Speisungsrohr (15) umfasst, wobei in dem oberen Teil des Glasrohrs (20) eine Stopfbüchse (33) vorgesehen ist, um die Abdichtung zwischen dem Glasrohr (20) und dem Speisungsrohr (15) zu realisieren.

8. Vorrichtung nach Anspruch 7, **dadurch gekennzeichnet, dass** sie Einrichtungen (32A, 32B) umfasst, um das Innere des Glasrohrs (20) mittels Inertgas zu spülen.

## Claims

1. Process for the continuous manufacture of metal wire sheathed in glass (10), consisting in:
- inserting metal into a glass tube, which is sealed in its lower part (21) and which is movable;
- heating the metal until it melts inside the glass tube (20), in its lower part, so as to create a molten metal bead (14) at the lower part (21) of the glass tube (20) so as to soften it;
- drawing in a continuous manner the assembly comprising molten metal surrounded in glass, which came from the lower part (21) of the glass tube (20), whilst slowly lowering the glass tube (20) partially melted at the level of this lower part (21), as it is consumed through the drawing of the sheathed wire obtained;
- using a heat resistant feed pipe (15), which is fixed with respect to the glass tube (20) and which has an external diameter less than the internal diameter of the glass tube (20), being totally inert as regards the metal mass (12) and not softening at the operating temperature, being placed inside the glass tube (20), filled with all of the metal needed to process a large quantity of metal wire sheathed in glass (10) and bored with a nozzle (13) at its lower part, this nozzle (13) being at a set short distance from the lower part (21) of the glass tube (20), in contact with the bead (14) produced, thus allowing the formation of said bead (14) and the continuous supply of the latter, so that the dimensions of said bead (14) remain substantially constant during the drawing of the wire, and in that means of applying negative pressure to the feed pipe (15) are used to retain the metal mass (12) in the tube, then to release and regulate the negative pressure so as to provoke the start of the flow of the molten metal via the nozzle (13) and to control the continuous flow of the metal mass (12) throughout drawing.

2. Process for manufacturing a metal wire sheathed in glass (10) according to claim 1, **characterized in that** an inert gas circulates between the feed pipe (15) and the glass tube (20).

3. Process according to claim 1, **characterized in that** the means of applying negative pressure and flushing (38) are used to flush out the inert gas inside the feed pipe (15) prior to the melting of the metal mass (12).

4. Device for continuous manufacture of a metal wire sheathed in glass (10) from a glass tube (20) sealed at its base (21), of set diameter mainly comprising:
- means of heating (23) to melt a metal mass (12) placed inside the glass tube (20) and to maintain a bead (14) produced in a liquid state softening the lower part (21) of the glass tube (20),
- a feed pipe containing the metal mass (12), with an external diameter smaller than the internal diameter of the glass tube (20), which resists heat shocks, is totally inert relative to the metal mass and does not soften at the melting temperature of the metal to be melted, said feed pipe (15) with a nozzle (13) in its lower part, being placed inside the glass tube so as to place its nozzle (13) very close to the lower part (21) of the glass tube;
- means of moving the glass tube (20) to make it progressively descend as it is consumed through the drawing of the wire; and
- means of applying negative pressure to the feed pipe (15) to create and manage a negative pressure on the inside of the latter, so as to regulate and control the flow of the molten part of the metal mass (12).

5. Device according to claim 4, **characterized in that** the heating means comprise a first inductor (23) to heat the inside of the feed pipe (15) at its lower part, over several centimetres, thus constituting a first induction furnace.

6. Device according to claim 4, **characterized in that** the heating means for the bead (14) inside the glass tube (20) comprise a second inductor (24), shaped like a shell and placed below the lower part (21) of the glass tube (20).

7. Device according to claim 4, **characterized in that** it comprises a circulation of argon (32A, 32B), between the glass tube (20) and the feed pipe (15), a cable gland joint being used at the upper part of the glass tube (20) to create a leak-proof joint between the glass tube (20) and the feed pipe (15).

8. Device according to claim 7, **characterized in that** it comprises a means of flushing using an inert gas (32A, 32B) in the glass tube (20).
